# EUROPÄISCHE PATENTSCHRIFT

(11) **EP 2 903 819 B1**
(45) Veröffentlichungstag und Bekanntmachung des Hinweises auf die Patenterteilung: **30.11.2016**
(21) Anmeldenummer: 12772754.3
(22) Anmeldetag: 05.10.2012
(51) Int. Cl.: E04F 15/08, B32B 13/02, B32B 13/12, B32B 21/02, B32B 21/08, B32B 27/08, B32B 27/30, B44C 5/04, E04F 15/02, E04F 15/04, E04F 15/10, E04F 15/20

(54) **FUSSBODENPANEEL FÜR DEN AUSSENBEREICH**
FLOOR PANEL FOR OUTDOORS
PANNEAU DE PLANCHER POUR L'EXTÉRIEUR

(43) Veröffentlichungstag der Anmeldung: 12.08.2015
(60) Teilanmeldung: 15158797.9
(73) Patentinhaber: Kronoplus Technical AG, 9052 Niederteufen (CH)
(72) Erfinder: DÖHRING, Dieter, 01561 Großhain (DE)
(74) Vertreter: Hess, Peter K. G.
(86) Internationale Anmeldenummer: PCT/EP2012/069704
(87) Internationale Veröffentlichungsnummer: WO 2014/053186

(56) Entgegenhaltungen:
- EP-A1- 1 262 607
- WO-A1-2009/050565
- CA-C- 2 235 542
- DE-A1-102006 029 963
- DE-U1-202007 016 185
- US-A- 4 180 615
- US-A1- 2011 296 780

## Beschreibung

### Gebiet der Erfindung

Die vorliegende Erfindung betrifft verbesserte Fußbodenpaneele für den Außenbereich, die in besonders flexibler Weise mit dekorativen Dekoren versehen werden können, sowie ein Verlegeverfahren für derartige Fußbodenpaneele.

### Hintergrund der Erfindung

Im Stand der Technik ist eine Vielzahl von Paneelarten für Fußbodenbeläge bekannt. Für den Außenbereich, d.h. außerhalb geschlossener Räume, wo die Fußböden Witterungseinflüssen mehr oder weniger ungeschützt ausgesetzt sind, werden typischerweise Massivholzdielen verwendet, die geeignet imprägniert sind. Derartige Massivholzdielen gibt es in verschiedenen Qualitäts- und Preisstufen, wobei insbesondere Tropenhölzer für den Außenbereich bevorzugt sind, da diese besonders gute witterungsbeständige Eigenschaften aufweisen. Jedoch sind Tropenhölzer relativ kostspielig und sie stehen im Verdacht wenig umweltverträglich zu sein, da in den Herkunftsländern häufig eine nachhaltige Holzwirtschaft nicht gegeben ist.

Für den Innenbereich haben in den letzten Jahren insbesondere so genannte Laminatpaneele eine weite Verbreitung erfahren. Laminatpaneele sind relativ kostengünstig und lassen sich gut verlegen. Sie basieren üblicherweise auf einer Trägerplatte aus MDF oder HDF Material, auf dessen Oberseite (Vorderseite) mehrere mit Harz imprägnierte Papiere aufgebracht sind, insbesondere ein Dekorpapier, sowie ein schützendes Overlay-Papier. Um die Abriebfestigkeit der Oberflächen zu erhöhen werden die Harze, wie beispielsweise Aminoharze, außerdem mit abriebfesten Partikeln versehen, wie insbesondere Aluminiumoxidpartikeln. Derartige Laminatpaneele sind jedoch für eine Anwendung im Außenbereich ungeeignet. Die Trägerplatte aus MDF oder HDF ist nicht feuchtigkeitsresistent und quillt bei Verwendung im Außenbereich zwangsläufig auf. Die üblicherweise verwendeten Dekorpapiere haben keine ausreichende UV-Beständigkeit, so dass die Druckfarben im Laufe der Zeit verbleichen, so dass das Dekor nach kurzer Zeit unansehnlich wird. Auch die Acrylat- bzw. Melaminharzoberflächen genügen den hohen Anforderungen durch Freibewitterung ohne spezielle Modifizierungen nicht.

In einer Weiterentwicklung derartiger Laminatpaneele wurden sogenannte direktbedruckte Paneele entwickelt. Bei diesen direktbedruckten Paneelen kommen in der Regel keine Papiere mehr zur Anwendung, insbesondere kein Dekorpapier. Die Dekorschicht, in den meisten Fällen ein Echtholzimitat, wird unter Verwendung von Dispersionsfarben mittels eines Tiefdruckverfahrens direkt auf die Oberfläche der Paneele gedruckt, welche zu diesem Zweck mit einer geeigneten Grundierung versehen sind. Die WO 2008/061791 A1 desselben Anmelders stellt eine Weiterentwicklung dieses bekannten Standes der Technik dar. Der Kern der Verbesserung dieser Druckschrift liegt darin, dass auf die Oberfläche eines Paneels zwei flüssige Polymerschichten nass-in-nass aufgetragen werden, sodass eine teilweise Vermischung der Beschichtungsmittel stattfindet. Diese beiden nass-in-nass aufgetragenen Schichten werden dann gemeinsam ausgehärtet, wobei die ausgehärtete resultierende Beschichtung aufgrund der teilweisen Durchmischung einen Härtegradienten aufweist, wobei die Härte der Beschichtung mit zunehmender Tiefe von der Oberfläche der resultierenden Beschichtung hergesehen abnimmt.

Aus der DE 20 2007 016 185 ist ein Laminatpaneel vorbekannt, das aus einer Trägerplatte besteht, die über ein darauf aufgebrachtes Dekor verfügt. Das Dekor kann dabei als auflaminierte Schicht ausgebildet sein. Über der Dekorschicht des Laminats soll eine Nutz- und Verschleißschicht aufgebracht werden, die etwa aus Melaminharz bestehen kann oder aus einem strahlengehärteten Material, wie insbesondere Polyester und/oder Acrlyat.

Weiter ist aus der EP 1 262 607 eine Fußbodenplatte und ein Verfahren zu deren Herstellung vorbekannt, bei der eine Trägerplatte aus Holz oder einem Holzwerkstoff mit einem aufkaschierten Sandwich aus einer Dekorschicht und einer oberen Verschleißschicht versehen ist. Dabei soll auf die der Trägerplatte zugewandten Rückseite der Dekorschicht eine Polyurethanschicht aufgebracht werden. Die Verschleißschicht kann beispielsweise eine Folie aus elektronenstrahl-gehärteten Acrylaten oder Polyester sein, die auf das Dekorpapier aufgebracht wird.

Manche der oben beschriebenen Laminat- oder Direktdruckpaneele haben den Vorteil, dass die Verwendung von sogenannten "Klick"-Verbindungsprofilen möglich ist, nämlich speziellen Nut- und Federverbindungsprofilen an den Längskanten der Paneele, die ein einfaches Ineinanderstecken durch eine Winkelbewegung um die Verriegelungsprofile herum ermöglichen, sodass ein Verlegen der Paneele auch für den Laien sehr einfach möglich ist. Außerdem kann das gewünschte Dekor völlig frei gewählt werden, da dieses aufgedruckt wird. Es lassen sich somit beispielsweise beliebige Holzarten imitieren, aber auch Stein- oder Fliesenoberflächen. Den bekannten Laminat- oder Direktdruckpaneelen ist jedoch gemeinsam, dass sie für eine Verwendung im Außenbereich nicht geeignet sind.

Daher stellt sich der vorliegenden Erfindung die Aufgabe, den vorbekannten Stand der Technik zu verbessern und insbesondere verbesserte Fußbodenpaneele für den Außenbereich zu schaffen, die die Vorteile von bekannten Laminatpaneelen hinsichtlich Flexibilität des Dekors und Einfachheit der Verlegung mit der Robustheit und Widerstandsfähigkeit von Echtholzdielen für den Außenbereich verbinden. Diese sowie andere Aufgaben, die beim Lesen der folgenden Beschreibung noch genannt werden oder vom Fachmann erkannt werden können, werden mit einem Fußbodenpaneel nach Anspruch 1 und einer Verwendung nach Anspruch 12 gelöst.

### Ausführliche Beschreibung der Erfindung

Ein erfindungsgemäßes Fußbodenpaneel für den Außenbereich umfasst eine Trägerplatte mit einer Vorder- und Rückseite, wobei die Trägerplatte an ihrer Vorderseite mit einer Dekor- bzw. einer Schutzschicht versehen ist. Unter Außenbereich wird hierin die Anwendung außerhalb geschlossener Räume verstanden, bei dem die Fußbodenpaneele zumindest teilweise der Witterung ausgesetzt sind, wie insbesondere die Verwendung auf Balkonen oder Terrassen von Gebäuden. Die Vorderseite ist diejenige Seite, die im verlegten Zustand der Paneele nach oben weist, also die Tritt- oder Nutzseite, und die Rückseite ist die gegenüberliegende Seite des Paneels, die im verlegten Zustand auf dem Untergrund aufliegt. Die Trägerplatte weist weiter an ihren Seiten, d.h. insbesondere an ihren Längs- und Querkanten, Kupplungsmittel in Form von Nut- und Federelementen auf. Derartige Nut- und Federelemente sind aus der Technologie der Laminatfußbodenherstellung bekannt und erlauben ein Verbinden mehrerer gleichartiger Paneele in Richtungen parallel zur Vorderseite als auch senkrecht zur Vorderseite durch Formschluss. Hierzu befinden sich jeweils komplementäre Kupplungsmittel an jeweils gegenüberliegenden Kanten der Platte, d.h. an einer Seite ist die Feder und an der gegenüberliegenden Seite der Platte ist die zugehörige Nut eingearbeitet. Erfindungsgemäß ist die Trägerplatte dadurch gekennzeichnet, dass sie entweder aus einer MDF- oder HDF-Platte aus acetyliertem Holz besteht, einer Faserzementplatte oder aus PVC (Polyvinylchlorid). Diese Materialien sind für die Verwendung im Außenbereich gut geeignet und witterungsbeständig insbesondere gegenüber Feuchtigkeit. Die Dekor- bzw. Schutzschicht besteht dabei aus einer strahlengehärteten, acrylathaltigen Folie.

MDF- oder HDF-Platten aus acetyliertem Holz sind besonders bevorzugt. Acetyliertes Holz ist dem Fachmann grundsätzlich bekannt. Bei der Acetylierung wird das Holz bzw. die Holzfasern, aus denen die MDF bzw. HDF Platten hergestellt werden, in einem chemischen Verfahren mit Essigsäure-Anhydrid behandelt. Hierdurch wird die Zellstruktur des Holzes dauerhaft verändert und insbesondere die Feuchtigkeitsaufnahme der so behandelten Holzfasern erheblich verringert. Aus derartig behandeltem Holz hergestellte MDF oder HDF Platten sind überraschend witterungsbeständig und zusammen mit den erfindungsgemäßen Mitteln an der Vorderseite der Platte hervorragend für Verwendungen im Außenbereich geeignet.

Als ebenfalls grundsätzlich geeignet haben sich Faserzementplatten erwiesen, die beispielsweise auch unter dem Handelsnamen Eternit von einem Anbieter bekannt sind. Faserzementplatten können einfach verarbeitet werden und insbesondere an ihren Seiten mit den notwendigen Kopplungsmitteln versehen werden. Schließlich haben die Erfinder weiter festgestellt, dass Trägerplatten auf PVC-Basis ebenfalls in Kombination mit der erfindungsgemäßen Dekor- bzw. Schutzschicht gut geeignet sind.

Die Dekor- bzw. Schutzschicht kann erfindungsgemäß aus einer strahlengehärteten, polyacrylathaltigen Folie bestehen. Die Folie ist insbesondere auf Papierbasis und mit einem strahlenhärtenden Acrylatsystem imprägniert und/ oder lackiert. Eine Strahlenhärtung kann beispielsweise durch die Behandlung mit Elektronenstrahlen oder UV-Strahlen erfolgen. Derartige Folien sind beispielsweise kommerziell von der Firm DTS Systemoberflächen GmbH unter dem Handelsnamen "Elesgo" erhältlich. Als nicht erfindungsgemäße Alternative zu dieser Spezialfolie hat sich gezeigt, dass auch eine Polymerschicht mit Härtegradient die notwendigen witterungsbeständigen Eigenschaften aufweist, die für ein Fußbodenpaneel für den Außenbereich notwendig sind. Die Herstellung einer Polymerschicht mit Härtegradient gemäß der vorliegenden Erfindung ist beispielsweise in der eingangs erwähnten WO 2008/061791 desselben Anmelders ausführlich beschrieben. Aus dem oben genannten wird klar, dass die Dekor- bzw. Schutzschicht nicht zwangsläufig eine einzelne Schicht ist sondern vielmehr auch aus mehreren unterschiedlichen Schichten bestehen kann, die zusammenwirken um eine Schutzfunktion bzw. eine Dekorfunktion bereit zu stellen.

Bei Verwendung einer Folie für die Dekor- bzw. Schutzschicht ist diese mittels eines Klebestoffs und zwar eines Polyurethanklebstoffs (wie eines Polyurethanschmelzklebstoffs) auf die Vorderseite der Trägerplatte aufgeklebt. Polyurethan-Klebstoffe eigenen sich besonders und erhöhen die Widerstandsfähigkeit des Verbundes gegenüber Witterungseinflüssen. In allen hierin beschriebenen Ausführungsformen ist bevorzugt, dass die Folie selbst mit einem dekorativen Muster bedruckt ist, wie beispielsweise einem Echtholzdekor oder einen Stein- oder Fliesendekor. Alternativ ist es jedoch ebenfalls möglich, die Folie ohne ein eigenes dekoratives Dekor zu verwenden, sodass diese als reine Schutzschicht dient. Erfindungsgemäß werden Zementfaserplatten auf der Rückseite mit einer wasserundurchlässigen Schicht versehen um das Eindringen von Wasser zu blockieren. Zementfaserplatten besitzen eine sehr hohe Dichte. Das einseitige Eindringen bereits kleiner Mengen an Wasser bewirkt ein Wölben der Paneele zur Oberseite, wodurch das optische Verlegebild gestört wird. Das Absperren der Rückseite kann mittels eines Acrylatlackes erfolgen, es kann mittels Polyurethanschmelzklebstoff eine PVC-Folie kaschiert werden, ein mit Polyurethanklebstoff aufgetragenes Glasvlies bietet einen besonders robusten Schutz.

Bevorzugt ist die Vorderseite der Trägerplatte unter der Folie bzw. der Polymerschicht mit einer Grundierung versehen. Eine derartige Grundierung kann die Haltbarkeit der Folie auf der Trägerplatte erhöhen. Insbesondere im Fall einer Polymerschicht als Dekor bzw. Schutzschicht ist es bevorzugt, dass die Grundierung selbst mit einem Dekor bedruckt wird. Über dieser bedruckten Grundierung wird dann die Polymerschicht mit Härtegradient aufgebracht. Da die Polymerschicht im ausgehärteten Zustand im Wesentlichen transparent ist, erhält das Fußbodenpaneel somit wie gewünscht eine ästhetisch attraktive Oberfläche. Ein Fußbodenpaneel mit einer Polymerschicht mit Härtegradient kann beispielsweise mit dem folgenden Verfahren hergestellt werden. In einem ersten Arbeitsschritt wird die Trägerschicht aus MDF oder HDF aus acetyliertem Holz, einer Faserzementplatte oder auch Polyvinylchlorid bereitgestellt. Auf diese Trägerplatte wird dann eine Grundierungsschicht aufgetragen und darauf ein dekoratives Muster gedruckt. Nach dem Aufdruck des dekorativen Musters wird auf die Grundierungsschicht eine erste flüssige Polymerschicht aufgetragen. Auf die noch feuchte erste Polymerschicht wird sodann eine zweite (von der ersten unterschiedliche) Polymerschicht aufgetragen, sodass eine teilweise Vermischung der Beschichtungsmittel stattfindet. Die Aushärtung der Grundierungsschicht sowie der Polymerschichten kann in einem Verfahrensschritt erfolgen. Unter Härten oder Aushärten einer Polymerschicht wird hierbei die chemische Reaktion verstanden, die bei der Polymerisation stattfindet. Hiervon zu unterscheiden ist das Trocknen derartiger Schichten, bei dem lediglich der Wassergehalt reduziert bzw. entfernt wird.

In einer besonders bevorzugten Ausführungsform der Erfindung ist unter der Grundierungsschicht eine Primerschicht auf die Trägerplatte aufgetragen bzw. vorgesehen. Die Primerschicht oder auch Haftvermittlerschicht genannt, verbessert dabei die Haftung der Grundierungsschicht auf dem Trägermaterial. Dem Fachmann ist hierzu eine Reihe von geeigneten Primermaterialien bekannt, die von entsprechenden chemischen Fachfirmen kommerziell erhältlich sind. Besonders bevorzugt wird zum Drucken des dekorativen Musters auf die Grundierung eine polymerisierbare Druckfarbe (Tinte) verwendet, insbesondere basierend auf polymerisierbaren Acrylhartharzen und/oder N-Vinylkaprolaktam (eines flüssigen Reaktiwerdünners), wie er beispielsweise von der Firma BASF bezogen werden kann. Üblicherweise kommen im Stand der Technik der Laminatfußbodenherstellung als Druckfarben Dispersionsfarben zum Einsatz, bestehend aus dem Fachmann geläufigen Pigmentmischungen und Bindemitteln auf Basis von Kasein oder Acrylatbindemitteln. Diese Dispersionsfarben werden regelmäßig bei den üblicherweise zum Einsatz kommenden Tiefdruckverfahren verwendet. Dispersionsfarben sind Druckfarben, die in der Regel aus drei Hauptbestandteilen bestehen, nämlich (a) einem Lösungsmittel (üblicherweise Wasser), (b) ein Bindemittel in Form von Kunststoffpolymeren (Acrylate), die sich bei Verdunstung des Lösungsmittels zusammenlagern und eine feste Schicht bilden, sowie (c) Farbpigmente zur Erzeugung der gewünschten Deckung und des gewünschten Farbtons. Die Trocknung dieser Dispersionsfarben erfolgt also nicht durch eine Polymerisation sondern durch ein Verflüchtigen des Lösungsmittels da die Bindemittel bereits als Polymere vorliegen. Die in der Dispersion enthaltenen Polymere verbinden sich bei Verflüssigung des Bindemittels auf freie physikalische Weise und bilden eine feste, geschlossene Schicht.

Die Anmelder haben nun überraschend festgestellt, dass verbesserte Hafteigenschaften des Schichtsystems erreicht werden können, und damit eine ausreichende Witterungsbeständigkeit und somit Eignung für den Außenbereich, wenn nicht die üblichen Dispersionsfarben verwendet werden, sondern stattdessen polymerisierbare Druckfarben. Dies gilt insbesondere bei der bevorzugten Anwendung mit einer Polymerschicht, insbesondere mit Härtegradient. Der positive Effekt ist besonders ausgeprägt, wenn die Druckfarbe und die Polymerschicht gemeinsam ausgehärtet bzw. polymerisiert werden (Druckfarbe und Polymerschicht können dann gemeinsam als "Dekorschicht" bzw. "Schutzschicht" angesehen werden, da sie funktional nicht mehr zu trennen sind). Wie oben erwähnt wird unter Aushärtung einer Polymerschicht beziehungsweise einer polymerisierbaren Druckfarbe (wie polymerisierbare Acrylate bzw. UV-reaktive Farben im Allgemeinen) hier die chemische Reaktion verstanden, die bei der Polymerisation stattfindet. Hiervon zu unterscheiden ist das Trocknen derartiger Schichten, bei dem lediglich das Lösungsmittel, wie etwa der Wassergehalt der Druckfarbe beziehungsweise der Polymerschichten verdunstet bzw. auf rein physikalische Weise reduziert wird.

Durch die gemeinsame Aushärtung (Polymerisation) der polymerisierbaren Bestandteile (Acrylatsysteme und/oder N-Vinylcaprolactam) von Druckfarbe und Polymerschicht erfolgt eine chemische Vernetzung an der Grenzfläche der beiden Schichten, von der angenommen wird, dass sie für die verbesserte Haftung der Schichten und damit die hervorragenden witterungsbeständigen Eigenschaften verantwortlich ist. Die herkömmlich verwendeten Dispersions-Druckfarben weisen keine polymerisierbaren Bestandteile auf, so dass keine derartige chemische Vernetzung zwischen Druckfarbe und der Polymerschicht stattfindet.

Polymerisierbare Bestandteile wie sie bevorzugt zum Einsatz kommen umfassen als Hauptbestandteile Acrylate, wie insbesondere AcrylatMonomere, -Oligomere und optional Fotoinitiatoren aber auch N-Vinylcaprolactam als flüssigen Reaktiwerdünner. N-Vinylcaprolactam kann der Druckfarbe zusätzlich zu den Acrylaten als Verdünner zugegeben werden und polymerisiert zusammen mit diesen aus. Alternativ ist es auch möglich auf die Acrylate zu verzichten und eine entsprechend größere Menge an N-Vinylcaprolactam vorzusehen, da das N-Vinylcaprolactam selbst polymerisiert werden kann. Details hierzu sind dem Fachmann beispielhaft aus der deutschen Veröffentlichungsschrift DE 197 02 476 A1 bekannt. In bevorzugten Ausführungsformen bestehen die polymerisierbaren Bestandteile daher im Wesentlichen aus N-Vinylcaprolactam. Die Fotoinitiatoren bewirken unter Einwirkung von Strahlung eine Polymerisation der Monomere bzw. Oligomere, wodurch die Druckfarbe schnell aushärtet.

Wie oben beschrieben sind daher allgemein bevorzugt für die vorliegende Erfindung verwendeten Druckfarben polymerisierbare Druckfarben und insbesondere polymersierbare Acrylatsysteme. Polymerisierbare Druckfarben enthalten als Hauptbestandteile Bindemittel, nämlich reaktive Doppelbindungen enthaltene Harze; polymerisierbare Bestandteile in Form von Monomeren bzw. Oligomeren, wie z.B. etwa Acrylatmonomere und Acrylatoligomere; optional Fotoinitiatoren für strahlenhärtbare Druckfarben; Additive wie etwa das oben erwähnte N-Vinylcaprolactam, Entschäumer, Verlaufsadditive, Verdickungsmittel u.a.; Farbpigmente wie Phthalocyanin-Pigmente, Azofarbstoffe, Indigoide Farbmittel, Anilinschwarz und/ oder Pigmentruße; sowie Füllstoffe zur Erzielung bestimmter physikalisch technischer Eigenschaften. Generell bevorzugt sind die verwendeten Druckfarben für die vorliegende Erfindung weiter strahlenhärtbare, wie insbesondere durch UV-Strahlen härtbare (UVhärtbare) Druckfarben. Besonders bevorzugt ist die Druckfarbe ein UVhärtbares polymerisierbares Acrylatsystem.

Vorzugsweise basiert die Grundierung auf einer wässrigen Dispersion (bevorzugt einem wässrigen Acrylatsystem), welche eine geeignete Zusammensetzung aufweist, so dass sie mittels eines Vorhangbeschichtungsverfahrens aufgetragen werden kann. Es hat sich überraschend gezeigt, dass die Verwendung von wässrigen Dispersionen auch auf Kunststoffoberflächen, wie insbesondere auf PVC Oberflächen, zufriedenstellende Hafteigenschaften erreicht. Im Stand der Technik wurde die Grundierung bisher üblicherweise in einem Walzenauftragsverfahren auf die Oberfläche der Trägerschicht aufgetragen. Bei derartigen Walzenauftragsverfahren wird das Beschichtungsmaterial (die Grundierung) direkt von der Walze auf die zu beschichtenden Oberflächen abgegeben oder indirekt über ein Beschichtungsband, das mittels einer Presswalze auf die zu beschichtenden Bauteile gepresst wird. Die Erfinder der vorliegenden Anmeldung haben festgestellt, dass Oberflächen die auf diese Weise hergestellt wurden insbesondere bei fein detaillierten Druckbildern, wie sie typischerweise bei der Nachahmung von Echtholzoberflächen notwendig sind, nicht die eigentlich zu erwartende Auflösung und Schärfe erreichen. Insbesondere kommt es bei Verwendung von den bevorzugten polymerisierbaren Druckfarben häufig zu störenden Streifen im Druckbild. Die Erfinder haben nun überraschend festgestellt, dass diese Probleme vermieden werden können, wenn anstatt eines Walzenauftragsverfahrens ein Vorhangbeschichtungsverfahren verwendet wird. Es wird vermutet, dass die Walzen bei Walzenauftragsverfahren, sei es, dass das Beschichtungsmaterial direkt von der Walze auf die zu beschichtende Oberfläche aufgetragen wird oder indirekt über ein Beschichtungsband, aufgrund ihrer Rundung in der übertragenen Beschichtung eine minimale Welligkeit der Oberfläche erzeugen. Die Berge und Täler dieser welligen Oberfläche sind jedoch so klein, dass die so hergestellten Oberflächen mit herkömmlichen Dispersionsfarben gut bedruckt werden können. Es wird jedoch vermutet, dass diese sehr geringe Unebenheit der so beschichteten Oberflächen bei der Verwendung von polymerisierbaren Druckfarben für die genannten Probleme verantwortlich ist. In jedem Fall kann durch das Gießen der Grundierung die unerwünschte Streifenbildung bei der Verwendung von polymerisierbaren Druckfarben (insbesondere polymerisierbaren Acrylatsystemen) wirksam unterbunden werden.

Vorhangbeschichtungsverfahren und entsprechende Anlagen sind dem Fachmann aus dem Stand der Technik (beispielsweise aus der EP 1 252 937 A1) vorbekannt, so dass auf eine detaillierte Beschreibung derselben hier verzichtet werden kann. Wichtig ist, dass bei Vorhangbeschichtungsverfahren ein flüssiger Vorhang von Beschichtungsmaterial erzeugt wird, durch den die zu beschichtenden Bauteile geführt werden. Ein Auftrag über Walzen findet nicht statt.

In einer bevorzugten Ausführungsform weist die Grundierungsschicht eine Flächenmasse zwischen 15 bis 150 g/m², bevorzugt eine Flächenmasse zwischen 30 bis 100 g/m², besonders bevorzugt eine Flächenmasse zwischen 40 und 70 g/m² und am bevorzugtesten eine Flächenmasse zwischen 50 bis 75 g/m² auf. Diese Flächenmasse führen in der bevorzugten Ausführungsform zu einer Dicke der Grundierungsschicht zwischen 5 und 300 µm, bevorzugt zwischen 15 und 200 µm, mehr bevorzugt zwischen 20 und 180 µm und am meisten bevorzugt zwischen 25 und 100 µm. Es hat sich herausgestellt, dass diese Flächenmassen bzw. Dicken der Grundierungsschicht einen optimalen Belag für das darauf aufgedruckte dekorative Muster bereitstellen.

Die Gesamtdicke der Polymersicht nach dem Aushärten sollte vorzugsweise eine Dicke von 20 - 300 µm haben, mehr bevorzugt von 40 - 250 µm, noch mehr bevorzugt von 50 - 220 µm und am meisten bevorzugt von 60 -180 µm. Bevorzugte Materialien für die Polymerschicht sind: 1,6 Hexandioldiacrylat, Polyesteracrylat, Polyurethan Acrylsäureester und Dipropylendiclycoldiacrylat.

Zur Erhöhung der Haltbarkeit der Fußbodenpaneele ist weiter bevorzugt vorgesehen, dass die Folie bzw. die Polymerschicht Additive in Form von UV-Absorbern und/oder Radikalfängern enthält. Die UV-Absorber sollten dabei vorzugsweise in einer ausreichenden Höhe bzw. Qualität zugegeben werden, dass zumindest eine 99% UV-Blockierung erreicht wird. Handelsübliche Radikalfänger sollen den Thermisch-oxidativen Angriff der Polymerschicht insbesondere durch den Einfluss der Sonnenstrahlung signifikant verlangsamen.

Besonders bevorzugt ist, wenn die Fußbodenpaneele an den Kanten der Vorderseite über Anschrägungen verfügen, sodass im verlegten Zustand zweier angrenzender Paneele zwischen den Paneelen eine V- oder U-förmige Fuge entsteht. Bei rechteckigen Paneelen sind beispielsweise die vier Kanten des Paneels die zur Vorderseite hinweisen angeschrägt, sodass beim Verlegen an den Stoßkanten zweier Paneele eine derartige Fuge entsteht. Die Fuge hat den Vorteil, dass beim Verlegen auftretende Unebenheiten des Untergrunds optisch gut kaschiert werden können.

Die Trägerplatte hat vorzugsweise eine Dicke zwischen 3 und 20 mm, noch mehr bevorzugt zwischen 4 und 15 mm, noch weiter bevorzugt zwischen 3 und 12 mm und am meisten bevorzugt zwischen 4 und 10 mm.

Die vorliegende Erfindung betrifft auch ein Verfahren bzw. eine Verwendung eines Paneels zur Herstellung eines Fußbodenbelags im Außenbereich, bei dem mehrere erfindungsgemäße Paneele in einem Außenbereich durch Verbinden der Paneele verlegt werden. Da die Trägerplatte der erfindungsgemäßen Paneele wie oben erwähnt relativ dünn ist, nämlich eine bevorzugte Dicke von nur 3 - 20 mm hat, sollte der Fußbodenuntergrund vorzugsweise geeignet vorbehandelt werden, um eine ebene Verlegung der verschiedenen Paneele zu erlauben. Als besonders geeignet hat sich hierbei herausgestellt, den Fußbodenuntergrund mit einer Schicht oder einem Bett von Splitt zu versehen und die Paneele auf dieser Splittschicht zu verlegen. Als Splitt kommt hier beispielsweise Bruchstein oder gebrochene Mineralstoffe in Korngrößen von 2 - 32 mm zur Anwendung. Als besonders bevorzugt ist es jedoch Korngrößen zu verwenden, die deutlich kleiner sind, nämlich vorzugsweise 3 - 25 mm, mehr bevorzugt von 3 - 15 mm und am meisten bevorzugt von 3 - 10 mm. Der Mengenanteil an Splittpartikeln in diesen bevorzugten Korngrößenbereichen sollte dabei mindestens 90% betragen. Mit anderen Worten, von 100 Splittpartikeln sollten zumindest 90 in dem bevorzugten Bereich liegen, um eine ebene und saubere Verlegung der relativ dünnen Trägerplatten zu ermöglichen. Um die verlegte Fläche mit Fußbodenpaneelen nicht unnötig Staunässe auszusetzen, muss beim Anlegen des Splittbettes eine ausreichende Drainage vorgesehen werden.

### Beschreibung von bevorzugten Ausführungsformen

Im Folgenden wird die Erfindung anhand der Figuren näher erläutert, wobei:
Figur 1 eine schematische Schnittansicht der Kopplungsmittel zweier gleichartiger Fußbodenpaneele zeigt; und
Figur 2 dieselben Paneele wie in Figur 1 im verbundenen Zustand zeigt; und
Figur 3 in einer schematischen Darstellung anzeigt, wie zwei gleichartige Fußbodenpaneele auf einem Splittbett angeordnet sind.

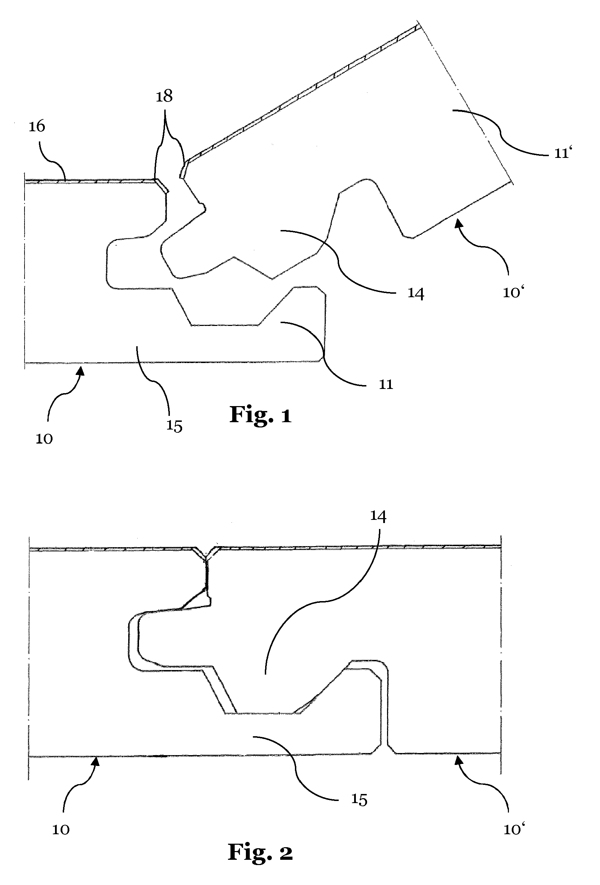

In Figur 1 sind in teilgeschnittenen, schematischen Ansichten zwei gleichartige Fußbodenpaneele 10 und 10' gezeigt, kurz bevor diese miteinander verbunden werden. Die Paneele 10 und 10' umfassen Trägerplatten 11, 11', die erfindungsgemäß entweder aus Faserzementplatten, Polyvinylchloridplatten oder MDF oder HDF Platten aus acetyliertem Holz bestehen. Die Paneele sind an ihren Kanten mit Kopplungsmitteln in Form von Nutelementen 14 und Federelementen 15 versehen, die ein Verbinden mehrerer Paneele in Richtungen parallel zur Vorderseite als auch senkrecht zur Vorderseite durch Formschluss erlauben. Dabei befinden sich an jedem Paneel jeweils ein Federelement 14 an einer Längskante und das passende Nutelement 15 an der gegenüberliegenden Längskante. An den Querkanten sind üblicherweise komplementäre Verbindungsmittel vorgesehen, die ein Verbinden zweier Paneele durch ein bloßes Absenken erlauben. Details zu derartigen Verriegelungsprofilen sind dem Fachmann aus der Technologie der Laminatbodenherstellung bekannt, wie z.B. der WO 0188306 oder der WO 0148332 desselben Anmelders. Wie der Fachmann aus der Figur 2 weiter erkennen kann, in der die beiden Paneele 10 und 10' im verbundenen Zustand gezeigt sind, ist es im dargestellten verbundenen Zustand nicht möglich die beiden Paneele durch ein horizontales Verschieben nach links oder rechts in der Figur 2 voneinander zu trennen, noch ist es möglich das rechte Paneel 10' durch ein bloßes senkrechtes Anheben von der Verbindung mit dem linken Paneel 10 zu lösen. Ein Lösen der Paneele ist damit nur über eine Winkelbewegung möglich, wie sie in Figur 1 angedeutet ist. An der Vorderseite der Paneele befindet sich eine Dekor bzw. Schutzschicht 16, die erfindungsgemäß aus einer strahlengehärteten acrylhaltigen Folie bestehen kann. Die Schicht 16 ist vorzugsweise mit einem dekorativen Muster versehen, wie etwa einem Echtholzimitat bzw. sie ist durchsichtig und ermöglicht somit die Betrachtung eines darunterliegenden Dekors, welches beispielsweise direkt auf der Vorderseite der Trägerplatten angebracht sein kann.

Wie weiter den Figuren 1 und 2 zu entnehmen ist, verfügen beide Paneele 10, 10' über Anschrägungen 18 an den Kanten der Vorderseite, sodass im verlegten Zustand zweier angrenzender Paneele zwischen den beiden Paneelen 10 und 10' eine V-förmige Fuge entsteht. Dies ist am besten aus Figur 2 zu erkennen.

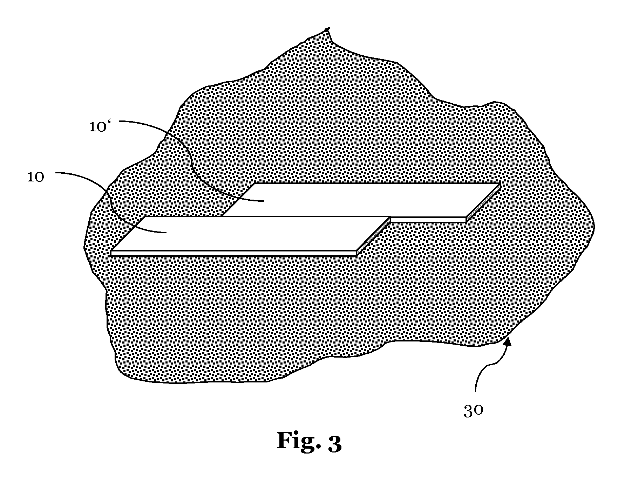

Figur 3 zeigt in einer schematischen Ansicht zwei Paneele 10, 10' wie sie auf einem Splittbett angeordnet sind. Das Splittbett 30 hat beispielsweise eine Dicke von 1 - 20 cm, mehr bevorzugt von 5 - 6 cm. Der Splitt besteht dabei vorzugsweise zu 90% (Mengenanteil) aus Korngrößen von 3 - 10 mm Dicke, wodurch eine besonders gute und ebene Verlegung der Paneele 10, 10' möglich ist.

## Patentansprüche

1. Fußbodenpaneel für den Außenbereich, umfassend eine Trägerplatte mit einer Vorderseite und einer Rückseite, wobei die Trägerplatte an ihrer Vorderseite mit einer Dekor- bzw. Schutzschicht versehen ist und an ihren Seiten über Kopplungsmittel in Form von Nut- und Federelementen verfügt, die ein Verbinden mehrerer gleichartiger Paneele in Richtungen parallel zur Vorderseite als auch senkrecht zur Vorderseite durch Formschluss erlauben, dass das Material der Trägerplatte ausgewählt ist aus der Gruppe bestehend aus:
• MDF oder HDF-Platte aus acetyliertem Holz;
• Faserzementplatte;
• Polyvinylchlorid;
**dadurch gekennzeichnet, dass** die Dekor- bzw. Schutzschicht eine strahlengehärtete acrylathaltige Folie ist, wobei die Folie mittels eines Polyurethanklebstoffs auf die Vorderseite der Trägerplatte aufgeklebt ist.

2. Fußbodenpaneel für den Außenbereich gemäß Anspruch 1, **dadurch gekennzeichnet, dass** auf der Rückseite der Zementfaserplatten ein Glasvlies, eine wasserundurchlässige Folie wie z.B. PVC, oder ein Acrylataufstrich angebracht ist.

3. Fußbodenpaneel für den Außenbereich nach einem der vorhergehenden Ansprüche, **dadurch gekennzeichnet, dass** die Folie mit einem Dekor bedruckt ist, insbesondere einem Holz-, Fliesen- oder Steindekor.

4. Fußbodenpaneel für den Außenbereich nach einem der vorhergehenden Ansprüche, **dadurch gekennzeichnet, dass** die Vorderseite der Trägerplatte unter der Folie mit einer Grundierung versehen ist.

5. Fußbodenpaneel für den Außenbereich nach dem vorhergehenden Anspruch, **dadurch gekennzeichnet, dass** die Grundierung mit einem Dekor bedruckt ist.

6. Fußbodenpaneel für den Außenbereich nach dem vorhergehenden Anspruch, **dadurch gekennzeichnet, dass** die zum Drucken des Dekors verwendete Druckfarbe ein polymerisierbares Acrylat enthält und/oder N-Vinylcaprolactam.

7. Fußbodenpaneel für den Außenbereich nach dem vorhergehenden Anspruch, **dadurch gekennzeichnet, dass** die zum Drucken des Dekors verwendete Druckfarbe ein polymerisierbares Acrylat enthält und N-Vinylcaprolactam enthält in einem Gewichtsanteil (%) in der Druckfarbe von 2 bis 50, mehr bevorzugt 5 bis 40 und am meisten bevorzugt von 10 bis 30 %.

8. Fußbodenpaneel für den Außenbereich nach einem der vorhergehenden Ansprüche 4 bis 7, **dadurch gekennzeichnet, dass** die Grundierung auf einem wässrigen Arylatsystem basiert und vorzugsweise geeignet ist, um mittels eines VorhangbeschichtungsVerfahrens aufgetragen zu werden.

9. Fußbodenpaneel für den Außenbereich nach einem der vorhergehenden Ansprüche 4 bis 8, **dadurch gekennzeichnet, dass** die Grundierung eine Dicke zwischen 5 und 300 µm aufweist, bevorzugt 15 und 200 µm, mehr bevorzugt 20 und 180 µm und am meisten bevorzugt zwischen 25 und 100 µm aufweist.

10. Fußbodenpaneel für den Außenbereich nach einem der vorhergehenden Ansprüche, **dadurch gekennzeichnet, dass** das Paneel nicht mit abriebfesten Partikeln, wie insbesondere Aluminiumoxidpartikel, versehen ist.

11. Fußbodenpaneel für den Außenbereich nach einem der vorhergehenden Ansprüche, **dadurch gekennzeichnet, dass** die Folie eine Papierfolie ist und mit Acrylat imprägniert ist.

12. Fußbodenpaneel für den Außenbereich nach einem der vorhergehenden Ansprüche, **dadurch gekennzeichnet, dass** die Folie Additive in Form von UV Absorbern und/oder Radikalfängern enthält, wobei die Folie bevorzugt Additive in Form von UV Absorbern in einer Menge enthält um zumindest eine 99 prozentige UV Blockierung zu erreichen.

13. Verwendung eines Paneels zur Herstellung eines Fußbodenbelags im Außenbereich, umfassend die Schritte:
Bereitstellen einer Mehrzahl von Paneelen nach einem der Ansprüche 1 bis 12;
Verlegen der Paneele in einem Außenbereich durch Verbinden der Paneele mittels der jeweiligen Verbindungsmittel.

14. Verwendung gemäß Anspruch 13, **dadurch gekennzeichnet, dass** der Fußbodenuntergrund mit einer Schicht von Splitt versehen wird und die Paneele auf dieser Splittschicht verlegt werden.

15. Verwendung gemäß Anspruch 14, **dadurch gekennzeichnet, dass** der Splitt zu 90 % (Mengenanteil) Korngrößen von 2 bis 32 mm aufweist; vorzugsweise von 3 bis 25 mm, mehr bevorzugt von 3 bis 15 mm und am meisten bevorzugt von 3 bis 10 mm.

## Claims

1. Floor panel for outdoor use, comprising
a carrier plate with a front side and rear side, wherein the carrier plate is provided on its front side with a decorative layer respectively a protective layer and has at its sides coupling means in the form of groove and tongue elements, which allow connecting multiple similar panels in directions parallel to the front side as well as perpendicular to the front side by form fit, that the material of the carrier plate is chosen from the group consisting of:
• MDF or HDF-board of acetylated wood;
• Fiber cement board;
• Polyvinylchloride;
**characterized in that** the decorative respectively protective layer is a radiation cured acrylate-containing film, wherein the film is adhered with a polyurethane adhesive to the front side of the carrier plate.

2. Floor panel for outdoor use according to claim 1, **characterized in that** there is provided a glass non-woven, a waterproof film, such as PVC, or an acrylate coating on the rear side of the fiber cement board.

3. Floor panel for outdoor use according to one of the preceding claims, **characterized in that** the film is imprinted with a decor, in particular a wood, tile or stone decor.

4. Floor panel for outdoor use according to one of the preceding claims, **characterized in that** the front side of the carrier plate is provided with an undercoat under the film.

5. Floor panel for outdoor use according to the preceding claim, **characterized in that** the undercoat is imprinted with a decor.

6. Floor panel for outdoor use according to the preceding claim, **characterized in that** the printing ink for printing the decor comprises a polymerizable acrylate and/or n-vinylcaprolactam.

7. Floor panel for outdoor use according to the preceding claim, **characterized in that** the printing ink for printing the decor comprises a polymerizable acrylate and n-vinylcaprolactam with a weight proportion (%) in the printing ink from 2 to 50, more preferably 5 to 40 and most preferably from 10 to 30 %.

8. Floor panel for outdoor use according to one of the preceding claims 4 to 7, **characterized in that** the undercoat is based on an aqueous acrylate-system and is preferably suitable to be coated with a curtain coating method.

9. Floor panel for outdoor use according to one of the preceding claims 4 to 8, **characterized in that** the undercoat provides a thickness between 5 and 300 µm, preferably 15 and 200 µm, more preferably 20 and 180 µm and most preferably between 25 and 100 µm.

10. Floor panel for outdoor use according to one of the preceding claims **characterized in that** the panel is not provided with abrasion-resistant particles, such as in particular aluminum oxide particles.

11. Floor panel for outdoor use according to one of the preceding claims **characterized in that** the film is a paper film and is impregnated with acrylate.

12. Floor panel for outdoor use according to one of the preceding claims **characterized in that** the film contains additives in form of UV-absorbents and/or radical interceptors, preferably wherein the film contains additives in form of UV-absorbents in such an amount, to achieve at least a 99 % UV-blocking.

13. Use of a panel for making a floor covering for an outdoor area comprising the steps:
Providing a plurality of panels according to one of the claims 1 to 12;
Installing the panels in an outdoor area by connecting the panels with the respective connecting means.

14. Use according to claim 13, **characterized in that** the floor ground is provided with a layer of gritting material and that the panels are installed on this gritting material layer.

15. Use according to claim 14, **characterized in that** the gritting material comprises 90 % (quantity fraction) particle sizes from 2 to 32 mm; preferably from 3 to 25 mm, more preferably from 3 to 15 mm and most preferably from 3 to 10 mm.

## Revendications

1. Panneau de plancher pour l'extérieur, comprenant une plaque support ayant une face endroit et un une face envers, la plaque support étant sur sa face endroit pourvue d'une couche décorative ou de protection, et disposant sur ses faces de moyens de couplage sous forme d'éléments à rainure et languette, qui permettent un assemblage, par liaison avec correspondance de forme, de plusieurs panneaux équivalents dans des directions tant parallèles à la face endroit que perpendiculaires à la face endroit, le matériau de la plaque support étant choisi dans le groupe consistant en
- une plaque de MDF ou de HDF en bois acétylé ;
- une plaque de béton fibreux ;
- du poly(chlorure de vinyle),
**caractérisé en ce que** la couche décorative ou de protection est une feuille contenant des acrylates, durcie sous l'effet d'un rayonnement, la feuille étant à l'aide d'un adhésif à base de polyuréthanne collée sur la face endroit de la plaque support.

2. Panneau de plancher pour l'extérieur selon la revendication 1, **caractérisé en ce qu'**un voile de verre, une feuille imperméable à l'eau telle que le PVC, ou un enduit à base d'acrylates, est appliquée sur la face envers des plaques de béton fibreux.

3. Panneau de plancher pour l'extérieur selon l'une des revendications précédentes, **caractérisé en ce que** la feuille est imprimée d'un décor, en particulier d'un décor de bois, de carreaux ou de pierre.

4. Panneau de plancher pour l'extérieur selon l'une des revendications précédentes, **caractérisé en ce que** la face endroit de la plaque support est, en-dessous de la feuille, pourvue d'un apprêt.

5. Panneau de plancher pour l'extérieur selon la revendication précédente, **caractérisé en ce que** l'apprêt est imprimé d'un décor.

6. Panneau de plancher pour l'extérieur selon la revendication précédente, **caractérisé en ce que** l'encre d'imprimerie utilisée pour l'impression du décor contient un acrylate polymérisable et/ou du N-vinylcaprolactame.

7. Panneau de plancher pour l'extérieur selon la revendication précédente, **caractérisé en ce que** l'encre d'imprimerie utilisée pour l'impression du décor contient un acrylate polymérisable et contient du N-vinylcaprolactame selon une proportion en poids (%), par rapport à l'encre d'imprimerie, de 2 à 50, plus particulièrement de 5 à 40 et tout spécialement de 10 à 30 %.

8. Panneau de plancher pour l'extérieur selon l'une des revendications précédentes 4 à 7, **caractérisé en ce que** l'apprêt est à base d'un système aqueux d'acrylates, et de préférence peut être appliqué par un procédé d'application au rideau.

9. Panneau de plancher pour l'extérieur selon l'une des revendications précédentes 4 à 8, **caractérisé en ce que** l'apprêt présente une épaisseur de 5 à 300 µm, de préférence de 15 à 200 µm, plus particulièrement de 20 à 180 µm et tout spécialement de 25 à 100 µm.

10. Panneau de plancher pour l'extérieur selon l'une des revendications précédentes, **caractérisé en ce que** le panneau n'est pas pourvu de particules résistantes à l'abrasion, telles en particulier que des particules d'oxyde d'aluminium.

11. Panneau de plancher pour l'extérieur selon l'une des revendications précédentes, **caractérisé en ce que** la feuille est une feuille de papier et est imprégnée d'un acrylate.

12. Panneau de plancher pour l'extérieur selon l'une des revendications précédentes, **caractérisé en ce que** la feuille contient des additifs sous forme d'absorbants UV et/ou des capteurs de radicaux, la feuille contenant de préférence des additifs sous forme d'absorbants UV en une quantité permettant d'atteindre un blocage des UV d'au moins 99 pourcents.

13. Utilisation d'un panneau pour la fabrication d'un revêtement de sol en extérieur, comprenant les étapes :
fourniture d'un grand nombre de panneaux selon l'une des revendications 1 à 12 ;
pose des panneaux en extérieur par assemblage des panneaux à l'aide des moyens d'assemblage.

14. Utilisation selon la revendication 13, **caractérisée en ce que** le sol sous le plancher est pourvu d'une couche de gravillons, les panneaux étant posés sur cette couche de gravillons.

15. Utilisation selon la revendication 14, **caractérisée en ce que** les gravillons présentent à 90 % (proportion en poids) une granulométrie de 2 à 32 mm, de préférence de 3 à 25 mm, plus particulièrement de 3 à 15 mm et tout spécialement de 3 à 10 mm.
